# EUROPEAN PATENT APPLICATION

(11) **EP 1 770 720 A1**
(43) Date of publication of application: **04.04.2007**
(21) Application number: 05743247.8
(22) Date of filing: 27.05.2005
(51) Int. Cl.: H01B 1/20, C23C 18/06, C23C 18/08, H01B 13/00, H01G 4/12

(54) **NICKEL COMPOUND CONTAINING SOLUTION, METHOD FOR PRODUCTION THEREOF, AND METHOD FOR FORMING THIN NICKEL METAL FILM USING THE SAME**

(30) Priority: 28.05.2004 JP 2004160082; 28.05.2004 JP 2004160083
(71) Applicant: SAKATA INX CORPORATION, Osaka-shi, Osaka 550-0002 (JP)
(72) Inventor: Iwase, Koji, Sakata Inx Corp., Osaka, 5500002 (JP); Sugiki, Megumi, Sakata Inx Corp., Osaka, 5500002 (JP)
(74) Representative: Hart Davis, Jason
(86) International application number: PCT/JP2005/009759
(87) International publication number: WO 2005/117029

(57) **Abstract**

The present invention provides a nickel compound-containing solution having suitability for screen printing, and a method of forming a nickel metal thin film comprising applying the nickel compound-containing solution by screen printing.

In a nickel compound obtained by reacting a reducing compound with nickel salt of organic acid, a nickel compound-containing solution, in which a nickel compound is stable and dissolved in terpineol, can be provided by using the specific structure compound as the reducing compound. This solution or the solution further containing resin such as cellulose and the like has the viscosity suitable for screening printing. A nickel metal thin film can be formed by applying the nickel compound-containing solution onto a substrate with screen printing and then heat-treating.

## Description

### TECHNICAL FIELD

The present invention relates to a nickel compound-containing solution (paste) for forming a nickel metal thin film layer on a substrate using a screen printing method. Among others, the present invention relates to a nickel compound-containing solution (paste) for forming an internal electrode of a multilayer ceramic capacitor (MLCC).
Particularly, it relates to a nickel compound-containing paste of a solution type which is advantageous for the densification of a nickel metal film and for reducing a thickness of a nickel metal film and can improve productivity.

### BACKGROUND ART

In recent years, in a trend of the miniaturization of mobile terminals and audio and visual equipment, lighter, more compact electronic devices have made remarkable progress and a smaller and high-capacity device is developed on a capacitor. Among others, the realization of a smaller and high-capacity MLCC is an issue essential for a high-density packaging and is studied to a large extent.
The MLCC takes on a structure in which many ceramic dielectric layers and metal internal electrode layers are alternately laminated. The so-called nickel paste which is formed by dispersing a nickel metal fine particle in an organic solvent containing an organic binder is used for the internal electrode layer and a green sheet formed by binding ceramics such as barium titanate with an organic binder is used for the dielectric layer. The dielectric layer and the internal electrode layer are simultaneously formed by printing a fine pattern of a nickel paste on a green sheet by a screen printing method, and bonding many thicknesses of the printed green sheets together by thermo-compression and baking the bonded green sheets. In order to realize a smaller and high-capacity MLCC, the development of a thinner device is required for both of the internal electrode layer and the dielectric layer.

The above-mentioned nickel paste is produced by mixing nickel metal powder in an organic vehicle prepared by dissolving an organic binder in an organic solvent, kneading the resulting mixture with a three roll mill or the like to disperse the nickel metal powder, and adding an organic solvent for dilution as required in order to adjust viscosity. Terpineol is principally used in the above-mentioned organic solvent, and methyl ethyl ketone, butyl carbitol acetate, or the like may be used in combination with terpineol, and a cellulose resin such as ethyl cellulose or nitrocellulose or an acrylic resin such as methyl methacrylate is used for the organic binder. Also, aromatic hydrocarbon such as triethylbenzene is used for the organic solvent for dilution. The nickel paste is used with its viscosity by a rotating viscometer adjusted to within a range of several Pa·s to several tens Pa·s to provide printability by a screen printing method.

As described above, in order to realize a smaller and high-capacity MLCC, development of a thinner internal electrode layer is required. However, since number of particles in the direction of thickness decreases as the internal electrode layer becomes thinner, it becomes liable to produce pinholes or cracks and it becomes difficult to form a compact film.
Therefore, conventionally the reduction in a particle diameter of a nickel metal particle has been implemented. Recently, even particle having a particle diameter of 100 to 200 nm or about several tens nanometers has come into use. But, because of an increase in a specific surface area in association with the reduction in a particle diameter, the dispersibility of a nickel metal particle is deteriorated and therefore paste viscosity increases, and this causes pinholes or cracks. Therefore, production of pinholes or cracks is still a fundamental factor inhibiting the development of a thinner device and a film thickness has not been fully reduced. This problem basically results from using metal particles as a nickel source.

For this problem, there is reported an attempt of using a solution type paste in which a nickel compound is dissolved. For example, it is shown that a conductive layer composed of nickel fine particles is obtained by dissolving nickel acetate in an organic solvent such as tetraethylene glycol to prepare paste, forming a coat of the paste by screen printing and baking the coat in Non-Patent Document 1. However, in practice, this method has problems that the solubility of nickel acetate in an organic solvent such as tetraethylene glycol is not enough and the paste is low in temporal stability, or this kind of solvent has high surface tension compared with terpineol etc. and the paste exhibits the low reproducibility of pattern images in screen printing.

On the other hand, a method by a solution for forming a nickel metal film, consisting of an alcohol solution containing a reducing chelate ligand having a hydrazone unit and a nickel ion, is disclosed in Patent Document 1. In accordance with this method, acetol hydrazone derived from acetol and hydrazine is reacted with nickel acetate to prepare a solution of a nickel compound in which acetol hydrazone coordinates with nickel in a solvent such as isopropyl alcohol. By applying this solution onto a substrate by a dip coating method or a spin coating method and baking the applied solution, a nickel metal thin film is obtained. This is the technique of forming the nickel metal thin film by the reducing force of the ligand and a highly compact film can be obtained.

However, in this method, since alcohol having high volatility and relatively high surface tension like isopropyl alcohol is employed as this alcohol solution and further the viscosity of the alcohol solution is low, it is difficult to employ a screen printing method for applying the solution and consequently the productivity of this method is decreased. Terpineol and the like, having the low volatility and the surface tension suitable for screen printing, are required as a solvent for applying a screen printing method. Also, it is desired that the viscosity of a solution is within the above-mentioned range. But, since the nickel compound described in this method has low compatibility with such a solvent or it is unstable in theses solvents, a problem of depositing the nickel compound arises. Further, this causes a problem that viscosity control of the solution is difficult to arise.

Patent Document 1: Japanese Kokai Publication No. 2001-192843
Non-Patent Document 1: Industrial Research Institute of Niigata Prefecture, Industrial technical research report No. 42-46, 2003

### SUMMARY OF THE INVENTION

It is an object of the present invention to provide a nickel paste of a solution type which contains a nickel compound having a reducing ligand and uses a solvent having suitability for a screen printing method. Specifically, the present invention aims to attain a nickel paste of a solution type which is highly soluble in a solvent such as terpineol and the like and uses a nickel compound being stable in these solvents and the viscosity of which can be controlled to within a range of several Pa·s to several tens Pa·s suitable for screen printing.

The present invention has been made to solve the above problems in the prior art.
Firstly, the present invention relates to a nickel compound-containing solution
   which contains a nickel compound obtained by reacting hydrazones prepared by reacting α-hydroxy ketones with N-substituted hydrazines with nickel salt of organic acid, and contains terpineol as a solvent.
Secondly, the present invention relates to a nickel compound-containing solution
   which contains a nickel compound obtained by reacting N-substituted 2-aminoethanols with nickel salt of organic acid, and contains terpineol as a solvent.
Thirdly, the present invention relates to a nickel compound-containing solution wherein nickel acetate or nickel formate is used as the nickel salt of organic acid in above reaction.
Fourthly, the present invention relates to a nickel compound-containing solution further containing a cellulose resin or an acrylic resin.
Furthermore, fifthly, the present invention relates to a method of forming a nickel metal thin film comprising applying above nickel compound-containing solution onto a substrate by a screen printing method and then heat-treating.

### DETAILED DESCRIPTION OF THE INVENTION

Hereinafter, the present invention will be described in detail.
Hydrazone obtained by α-hydroxy ketones and unsubstituted hydrazine or 2-aminoethanols have a reducing property and has a strong effect of accelerating the dissolution of nickel salt of organic acid in a solvent such as isopropyl alcohol, but they does not have an effect of dissolving the nickel salt of organic acid contained in a solvent with a low polarity in terpineol. Instead, the present inventors have found that nickel salt of organic acid is stably dissolved in terpineol by employing hydrazones obtained by reacting N-substituted hydrazines with α-hydroxy ketones or N-substituted 2-aminoethanols. The present invention has been made since this finding was of decisive importance for solving the above-mentioned problems.

Examples of α-hydroxy ketones in the present invention include, for example, acetol, acetoin and dihydroxyacetone.
N-substituted hydrazines to be reacted with these ketones are hydrazines of which one or two hydrogen atoms of one amino group are replaced. As a substituent group, an alkyl group is preferred. The above-mentioned alkyl group may have a hydroxyl group and examples of such an alkyl group include a methyl group, an ethyl group, a hydroxyethyl group, and a propyl group. In the case of N-substituted hydrazines, of which two hydrogen atoms of one amino group are replaced, two substituent groups may be the same or different. Specifically, N-substituted hydrazines, of which one hydrogen atoms of one amino group are replaced, such as monomethyl hydrazine, hydroxyethylhydrazine and the like, and N-substituted hydrazines, of which two hydrogen atoms of one amino group are replaced, such as dimethyl hydrazine and the like are given.
A ratio of α-hydroxy ketones to be used to N-substi tuted hydrazines to be used is not particularly limited and it may be decided so as to enhance the yield of hydrazones. This ratio may be 1:1 by mole, for example, since these compounds react substantially quantitative.

The above-mentioned α-hydroxy ketones react with N-substituted hydrazines at room temperature and forms hydrazones. It is thought that these compounds form a chelate type coordinate bond with a nickel ion through unshared electron pairs of a hydroxyl group and an amino group, and exert an effect of accelerating the dissolution in terpineol or the like.
Furthermore, a normal method can be employed in order to react α-hydroxy ketones with N-substituted hydrazines, and the normal method includes, for example, a method of completing a reaction in a lower alcohol solvent in which both materials are dissolved such as methanol, ethanol, propyl alcohol and isopropyl alcohol at room temperature.

N-substituted 2-aminoethanols in the present invention are 2-aminoethanol of which one or two hydrogen atoms of an amino group are replaced. As a substituent group, an alkyl group is preferred. The above-mentioned alkyl group may have a hydroxyl group and examples of such an alkyl group include methyl group, an ethyl group, a hydroxyethyl group, a propyl group, and a butyl group. These substituent groups may be a monosubstitution product or a disubstitution product and substituent groups in the latter substitution product may be the same or different. Specifically, N-monoalkyl-2-aminoethanols such as N-methyl-2-aminoethanol, diethanolamine and the like; and N,N-dialkyl-2-aminoethanols such as N,N-dimethyl-2-aminoethanol, N,N-dibutyl-2-aminoethanol and the like are given. It is thought that these compounds form a chelate type coordinate bond with a nickel ion through unshared electron pairs of a hydroxyl group and an amino group, and exert an effect of accelerating the dissolution in terpineol or the like.

As nickel salt of organic acid, carboxylic acid salt of Ni (II) can be used. Examples of carboxylic acid salt of Ni include nickel acetate or nickel formate. This salt may have crystal water or need not have crystal water. Specific examples of carboxylic acid salt of Ni include nickel acetate tetrahydrate and nickel formate dihydrate.

The nickel compound-containing solution of the present invention can be obtained by reacting hydrazones prepared by reacting these α-hydroxy ketones with N-substituted hydrazines or N-substituted 2-aminoethanols with nickel salt of organic acid in an appropriate solvent and replacing the solvent with terpineol.
A solvent to be used for a reaction is not particularly limited as long as it is a substance in which hydrazones prepared by reacting α-hydroxy ketones with N-substituted hydrazines, N-substituted 2 aminoethanols, and a nickel compound which is a reaction product are dissolved. For example, a low molecular weight solvent such as methanol, ethanol, propyl alcohol and isopropyl alcohol can be used.
The reaction is carried out at a boiling point of a reaction solvent, and the time when unreacted nickel salt of organic acid disappears or ceases to decrease may be assumed to be an end point of a reaction. This reaction can be carried out without a solvent and the replacement of a solvent can also be omitted by using terpineol as a reaction solvent from the beginning. However, in this case, if organic acid salt having crystal water is used as nickel salt of organic acid, crystal water is liberated in a system as the reaction proceeds and therefore a dehydration operation is required. Furthermore, when unreacted nickel salt of organic acid remains, this nickel salt of organic acid may be removed by filtration or centrifugation.

Further, when salt of organic acid liberated by the reaction and amine has low solubility in the reaction solvent, a reaction system may be gelated and there may be cases where the reaction does not proceed. In such a case, by changing the salt of the organic acid and amine to nickel salt of organic acid which is dissolved in the reaction solvent, or by changing the reaction solvent to a reaction solvent in which this salt is well dissolved, or by carrying out the reaction without using a solvent or in terpineol, a problem can be avoided. For example when isopropyl alcohol is used as a reaction solvent and nickel acetate is used as nickel salt of organic acid, gelation occurs since acetate salt of N-substituted 2-aminoethanols is hardly-soluble in isopropyl alcohol. In this case, for example, by changing the solvent to ethyl alcohol, a problem can be avoided.

In the above-mentioned reaction, hydrazones obtained by reacting α-hydroxy ketones with N-substituted hydrazines or N-substituted 2-aminoethanols is preferably 1 to 2-fold in molar quantity with respect to a nickel ion quantity and furthermore preferably 2-fold in molar quantity. When they are less than 1-fold in molar quantity, the yield of the above reaction becomes low and an effect of accelerating the dissolution in terpineol of a nickel compound to be obtained tends to be lower. Conversely, when they are more than 2-fold in molar quantity, the effect of accelerating the dissolution tends to be saturated.

The nickel compound-containing solution of the present invention uses terpineol as a solvent, but it may uses methyl ethyl ketone, butyl carbitol acetate or the like in combination with terpineol.
In the nickel compound-containing solution of the present invention, the content of a nickel compound is preferably 1% by mass or more, and more preferably 2% by mass or more on the metal nickel obtained by reduction equivalent basis.
When the content of the nickel compound increases, there is an advantage that a thick nickel coat can be formed in a small amount of the solution though the viscosity of the solution increases. Accordingly, the content of the nickel compound in the solution is preferably set in consideration of viscosity suitable for coating/printing means or a required thickness of a nickel coat.

The nickel compound-containing solution of the present invention can contains a cellulose resin or an acrylic resin as required. By containing this, the viscosity of the nickel compound-containing solution is adjusted or a function as a binder is utilized, and a resin used in a conventional nickel paste can be used without limit. Specifically, as a cellulose resin, ethyl cellulose, nitrocellulose or the like can be used and as an acrylic resin, methyl methacrylate or the like can be used. The content of these resins in the nickel compound-containing solution may be up to 5% by weight as a guide. A terpineol solution of these resins has been prepared in advance and into this, the above-mentioned terpineol solution of the nickel compound may be mixed. Alternatively, when a reaction solvent is replaced, a terpineol solution of these resins may be used in place of terpineol.

Furthermore, a diluent solvent may be added to the nickel compound-containing solution of the present invention as required. As the diluent solvent, a solvent used in a conventional nickel paste can be used without particular limitation and specific examples of the diluent solvent include aromatic hydrocarbons such as triethylbenzene and the like.
In the present invention, by thus using the binder resin or the diluent solvent as required or by simply adjusting the content of terpineol, the viscosity of the nickel compound-containing solution can be controlled to within a range of several Pa·s to several tens Pa·s suitable for screen printing.
Incidentally, this viscosity can be measured by following a procedure described later.

A method of forming a nickel metal thin film of the present invention comprises applying the above-mentioned nickel compound-containing solution onto a substrate by a screen printing and then heat-treating.

In accordance with the present invention, a nickel compound-containing solution formed by dissolving a nickel compound in terpineol having suitability for screen printing can be obtained. This nickel compound-containing solution, or a solution formed by adding a binder resin to the nickel compound-containing solution to adjust its viscosity has suitability for screen printing and can form a nickel metal thin film by applying it onto a substrate and baking it.

### BEST MODES FOR CARRYING OUT THE INVENTION

Hereinafter, the present invention will be described in more detail by way of examples, but the present invention is not limited to these examples unless departing from the purport and scope of the invention. In addition, "part(s)" and "%" refer to "part(s) by mass" and "% by mass" in the following descriptions.

### <Viscosity>

Viscosity was measured at a temperature of 25°C with a TV-20 type rotating viscometer manufactured by TOKI SANGYO CO., LTD. An L type viscometer was used for a low viscosity region and an H type viscometer was used for a high viscosity region.

### (Example 1)

222 parts by mass of acetol was dissolved in 700 parts by mass of isopropyl alcohol and during stirring the resulting solution, 228 parts by mass of hydroxyethylhydrazine was added dropwise. After this instillation, a mixture was stirred at room temperature for 3 hours or more to obtain hydrazone. This was added to 373 parts by mass of nickel acetate tetrahydrate and a mixture was refluxed for 1 hour to obtain an isopropyl alcohol solution of a nickel compound. 271 parts by mass of terpineol was added to the resulting solution and isopropyl alcohol was removed by vacuum distillation to obtain a terpineol solution containing nickel in an amount of 8%. Color of the terpineol solution was brown and its viscosity was 15.1 Pa·s (measured at 20 rpm with a H type). 300 parts by mass of the obtained terpineol solution of a nickel compound and 132 parts by mass of a 10% terpineol solution of ethyl cellulose were mixed with a three roll to obtain a nickel paste containing nickel in an amount of 5.6% and ethyl cellulose in an amount of 3.1%. The viscosity of the nickel paste was 30 Pa·s (measured at 10 rpm with a H type). Using this nickel paste, screen printing (200 mesh) was conducted on a heat-resisting glass plate with a size of 2 cm x 7 cm (Corning No. 1737). The printed glass plate was dried at 110°C for 30 minutes and further heat-treated at 500°C to obtain a thin film. It was verified by an X-ray diffraction method that this thin film was composed of nickel metal.

### (Example 2)

264 parts by mass of acetoin was dissolved in 700 parts by mass of isopropyl alcohol and during stirring the resulting solution, 228 parts by mass of hydroxyethylhydrazine was added dropwise. After this instillation, a mixture was stirred at room temperature for 3 hours or more to obtain hydrazone. This was added to 373 parts by mass of nickel acetate tetrahydrate and a mixture was refluxed for 1 hour to obtain an isopropyl alcohol solution of a nickel compound. 895 parts by mass of terpineol was added to the resulting solution and isopropyl alcohol was removed by vacuum distillation to obtain a terpineol solution containing nickel in an amount of 5%. Color of the terpineol solution was yellow-brown and its viscosity was 1.1 Pa·s (measured at 100 rpm with a H type). 100 parts by mass of the obtained terpineol solution of a nickel compound and 44 parts by mass of a 10% terpineol solution of ethyl cellulose were mixed with a three roll to obtain a nickel paste containing nickel in an amount of 3.5% and ethyl cellulose in an amount of 3.1%. The viscosity of the nickel paste was 8.1 Pa·s (measured at 50 rpm with a H type). Using this nickel paste, screen printing (200 mesh) was conducted on a heat-resisting glass plate with a size of 2 cm x 7 cm (Corning No. 1737). The printed glass plate was dried at 110°C for 30 minutes and further heat-treated at 500°C to obtain a thin film. It was verified by an X-ray diffraction method that this thin film was composed of nickel metal.

### (Example 3)

74 parts by mass of acetol was dissolved in 300 parts by mass of isopropyl alcohol and during stirring the resulting solution, 60 parts by mass of dimethylhydrazine was added dropwise. After this instillation, a mixture was stirred at room temperature for 3 hours or more to obtain hydrazone. This was added to 124 parts by mass of nickel acetate tetrahydrate and a mixture was refluxed for 1 hour to obtain an isopropyl alcohol solution of a nickel compound. 322 parts by mass of terpineol was added to the resulting solution and isopropyl alcohol was removed by vacuum distillation to obtain a terpineol solution containing nickel in an amount of 5%. Color of the terpineol solution was yellow-brown and its viscosity was 137 mPa·s (measured at 20 rpm with a L type). 100 parts by mass of the obtained terpineol solution of a nickel compound and 50 parts by mass of a 10% terpineol solution of ethyl cellulose were mixed with a three roll to obtain a nickel paste containing nickel in an amount of 3.3% and ethyl cellulose in an amount of 3.3%. The viscosity of the nickel paste was 3.9 Pa·s (measured at 100 rpm with a H type). Using this nickel paste, screen printing (200 mesh) was conducted on a heat-resisting glass plate with a size of 2 cm x 7 cm (Corning No. 1737). The printed glass plate was dried at 110°C for 30 minutes and further heat-treated at 500°C to obtain a thin film. It was verified by an X-ray diffraction method that this thin film was composed of nickel metal.

### (Comparative Example 1)

444 parts by mass of acetol was dissolved in 1500 parts by mass of isopropyl alcohol and during stirring the resulting solution, 300 parts by mass of hydrazine monohydrate was added dropwise. After this instillation, a mixture was stirred at room temperature for 3 hours or more to obtain hydrazone. This was added to 747 parts by mass of nickel acetate tetrahydrate and a mixture was refluxed for 1 hour to obtain an isopropyl alcohol solution of a nickel compound. 382 parts by mass of terpineol was added to the resulting solution and isopropyl alcohol was removed by vacuum distillation, but a precipitation was found.

### (Example 4)

370 parts by mass of nickel formate dihydrate was added to 100 parts by mass of isopropyl alcohol and to this, 421 parts by mass of diethanolamine was added and a mixture was refluxed for 1 hour to obtain an isopropyl alcohol solution of a nickel compound. 118 parts by mass of terpineol was added to the resulting solution and isopropyl alcohol was removed by vacuum distillation to obtain a terpineol solution containing nickel in an amount of 10%. Color of the terpineol solution was blue and its viscosity was 1.29 Pa·s (measured at 100 rpm with a H type). Using this terpineol solution, screen printing (200 mesh) was conducted on a heat-resisting glass plate with a size of 2 cm x 7 cm (Corning No. 1737). The printed glass plate was dried at 110°C for 30 minutes and further heat-treated at 500°C to obtain a thin film. It was verified by an X-ray diffraction method that this thin film was composed of nickel metal.

### (Example 5)

100 parts by mass of the terpineol solution of a nickel compound obtained in Example 4 and 120 parts by mass of a 10% terpineol solution of ethyl cellulose were mixed with a three roll to obtain a nickel paste containing nickel in an amount of 4.5% and ethyl cellulose in an amount of 5.5%. The viscosity of the nickel paste was 20 Pa·s (measured at 20 rpm with a H type). Using this nickel paste, screen printing (200 mesh) was conducted on a heat-resisting glass plate with a size of 2 cm x 7 cm (Corning No. 1737). The printed glass plate was dried at 110°C for 30 minutes and further heat-treated at 500°C to obtain a thin film. It was verified by an X-ray diffraction method that this thin film was composed of nickel metal.

### (Example 6)

249 parts by mass of nickel acetate tetrahydrate was added to 500 parts by mass of ethyl alcohol and to this, 347 parts by mass of 2-dibutylaminoethanol was added and a mixture was refluxed for 1 hour to obtain an ethyl alcohol solution of a nickel compound. 142 parts by mass of terpineol was added to the resulting solution and ethyl alcohol was removed by vacuum distillation to obtain a terpineol solution containing nickel in an amount of 8%. Color of the terpineol solution was yellow-green and its viscosity was 195 mPa.s (measured at 10 rpm with a L type) . 150 parts by mass of the obtained terpineol solution of a nickel compound and 66 parts by mass of a 10% terpineol solution of ethyl cellulose were mixed with a three roll to obtain a nickel paste containing nickel in an amount of 5.6% and ethyl cellulose in an amount of 3.1%. The viscosity of the nickel paste was 4.2 Pa·s (measured at 100 rpm with a H type). Using this nickel paste, screen printing (200 mesh) was conducted on a heat-resisting glass plate with a size of 2 cm x 7 cm (Corning No. 1737). The printed glass plate was dried at 110°C for 30 minutes and further heat-treated at 500°C to obtain a thin film. It was verified by an X-ray diffraction method that this thin film was composed of nickel metal.

### (Example 7)

185 parts by mass of nickel formate dihydrate was added to 500 parts by mass of isopropyl alcohol and to this, 150 parts by mass of N-methyl-2-aminoethanol was added and a mixture was refluxed for 1 hour to obtain an isopropyl alcohol solution of a nickel compound. 403 parts by mass of terpineol was added to the resulting solution and isopropyl alcohol was removed by vacuum distillation to obtain a terpineol solution containing nickel in an amount of 8%. Color of the terpineol solution was blue and its viscosity was 298 mPa·s (measured at 10 rpm with a L type). 300 parts by mass of the obtained terpineol solution of a nickel compound and 132 parts by mass of a 10% terpineol solution of ethyl cellulose were mixed with a three roll to obtain a nickel paste containing nickel in an amount of 5.6% and ethyl cellulose in an amount of 3.1%. The viscosity of the nickel paste was 4.3 Pa·s (measured at 100 rpm with a H type). Using this nickel paste, screen printing (200 mesh) was conducted on a heat-resisting glass plate with a size of 2 cm x 7 cm (Corning No. 1737). The printed glass plate was dried at 110°C for 30 minutes and further heat-treated at 500°C to obtain a thin film. It was verified by an X-ray diffraction method that this thin film was composed of nickel metal.

### (Comparative Example 2)

249 parts by mass of nickel acetate tetrahydrate was added to 500 parts by mass of isopropyl alcohol and to this, 122 parts by mass of monoethanolamine was added and a mixture was refluxed for 1 hour to obtain an isopropyl alcohol solution of a nickel compound. When terpineol was added to the resulting solution, a precipitation was found.

### INDUSTRIAL APPLICABILITY

In accordance with the present invention, a nickel compound-containing solution formed by dissolving a nickel compound in terpineol having suitability for screen printing can be obtained. This nickel compound-containing solution, or a solution formed by adding a binder resin to the nickel compound-containing solution to adjust its viscosity has suitability for screen printing and can form a nickel metal thin film by applying it onto a substrate and baking it.

## Claims

1. A nickel compound-containing solution
which contains a nickel compound obtained by reacting hydrazones prepared by reacting α-hydroxy ketones with N-substituted hydrazines with nickel salt of organic acid, and contains terpineol as a solvent.

2. A nickel compound-containing solution
which contains a nickel compound obtained by reacting N-substituted 2-aminoethanols with nickel salt of organic acid, and contains terpineol as a solvent.

3. The nickel compound-containing solution according to claim 1 or 2,
wherein nickel acetate or nickel formate is used as the nickel salt of organic acid.

4. The nickel compound-containing solution according to any one of claims 1 to 3, further containing a cellulose resin or an acrylic resin.

5. A method of forming a nickel metal thin film comprising applying the nickel compound-containing solution according to any one of claims 1 to 4 onto a substrate by screen printing and then heat-treating.
